Europäisches Patentamt

European Patent Office

Office européen des brevets

(19)

(11) **EP 1 300 611 B1**

(12) **FASCICULE DE BREVET EUROPEEN**

(45) Date de publication et mention
de la délivrance du brevet:
**27.07.2005 Bulletin 2005/30**

(51) Int Cl.⁷: **F16H 61/02**

(21) Numéro de dépôt: **02292455.9**

(22) Date de dépôt: **04.10.2002**

(54) **Procédé de gestion d'un calculateur de boite de vitesses en mode de kick**

Verfahren zum Verwalten einer Getriebesteuereinheit im Kickdown-Modus

Method for managing a transmission control unit in kickdown mode

(84) Etats contractants désignés:
**BE DE ES GB IT**

(30) Priorité: **04.10.2001 FR 0112741**

(43) Date de publication de la demande:
**09.04.2003 Bulletin 2003/15**

(73) Titulaire: **Renault s.a.s.**
**92100 Boulogne Billancourt (FR)**

(72) Inventeurs:
• **Frappa, Sophie**
**75013 Paris (FR)**
• **Pouyau, Laurent**
**92290 Chatenay Malabry (FR)**
• **Rivoiron, Sylvain**
**95320 Saint Leu la Foret (FR)**

(56) Documents cités:
**WO-A-00/63591       DE-A- 19 961 979**
**US-A- 5 083 480       US-A- 6 134 495**

## Description

L'invention concerne un procédé de gestion d'un calculateur commandant le passage des rapports d'une boîte de vitesses de véhicule automobile selon les caractéristiques du préambule de la revendication 1.

On connaît de nombreux exemples de procédés de commande de ce type.

Conventionnellement, les boîtes de vitesses automatiques sont équipées d'une fonction de sécurité dite de "kick-down", ou "kick" qui permet de rétrograder de un ou plusieurs rapports de transmission pour que le véhicule puisse bénéficier d'une reprise de puissance, par exemple pour effectuer un dépassement. Cette fonction est généralement déclenchée lorsque le conducteur du véhicule enfonce la pédale d'accélérateur du véhicule à fond.

De manière connue, le passage des rapports des boîtes de vitesses automatiques en mode normal est régi par un calculateur fonctionnant selon une cartographie comportant des zones associées chacune à l'engagement d'un rapport déterminé. Le calculateur détermine le point de fonctionnement du véhicule, qui est défini notamment par la vitesse du véhicule et la position de la pédale d'accélérateur, qui est elle-même exprimée sous la forme d'un pourcentage compris entre 0 et 100%, le pourcentage nul correspondant à la position relâchée de la pédale d'accélérateur et le pourcentage de 100%, correspondant à la position d'enfoncement maximal de la pédale d'accélérateur effectué lentement. En fonction de la position de ce point de fonctionnement dans une zone déterminée, le calculateur commande le passage du rapport correspondant.

Chaque zone associée à un rapport est séparée de la zone voisine par une courbe associée à une loi de passage, cette loi étant assimilable à une courbe qui est elle aussi fonction de la vitesse du véhicule et de la position de la pédale d'accélérateur.

L'intégration de la fonction dite de "kick" dans une telle boîte consiste à associer un enfoncement maximal de la pédale d'accélérateur effectué rapidement à un intervalle de positions fictives de la pédale d'accélérateur qui est exprimé sous la forme d'un pourcentage supérieur à 100%, et auquel correspond, pour chaque loi, une portion supplémentaire de courbe d'un profil particulier qui prolonge la courbe associée à ladite loi du mode de fonctionnement normal, et qui est exclusivement associée à l'utilisation en "kick".

De manière connue, les portions de courbes associées à la fonction de "kick" sont identiques d'une loi de passage à l'autre. Cette configuration est pénalisante en ce qu'elle conduit le calculateur à effectuer des calculs de manière redondante.

Par ailleurs, cette configuration présente l'inconvénient de ne pouvoir permettre qu'un rétrogradage simple puisque, pour une vitesse déterminée du véhicule, le calculateur ne peut, lorsqu'un enfoncement maximal et rapide de le pédale d'accélérateur ou "kick" est détecté, que décomposer le passage de rapport en un passage en mode normal suivi d'un passage en mode de kick. Au cours de ce dernier passage en mode de kick, le calculateur détermine le passage d'un point de fonctionnement, situé à la limite de la dernière zone rencontrée associée à un rapport en mode normal, à un autre point de fonctionnement situé dans la zone de kick associée au rapport de rang immédiatement inférieur.

Pour remédier à cet inconvénient, l'invention propose un procédé de gestion d'un calculateur du type décrit précédemment qui fonctionne indépendamment des lois de passage associées au mode de fonctionnement normal.

Dans ce but, l'invention propose un procédé de gestion d'un calculateur du type décrit précédemment, caractérisé en ce que le mode de fonctionnement de kick commande le passage des rapports indépendamment des lois qui leur sont associées en mode de fonctionnement normal et en ce qu'il comporte au moins :

- une première étape de détermination d'un rapport objectif provoquant l'accélération maximale du véhicule compte tenu de sa vitesse instantanée, et
- une deuxième étape de montée des rapports au cours de laquelle, à partir du rapport objectif précédemment déterminé, le calculateur commande la montée des rapports compte tenu de la vitesse instantanée du véhicule de manière à provoquer l'accélération maximale du véhicule.

Selon d'autres caractéristiques de l'invention

- le procédé comporte une troisième étape indépendante de mémorisation, préliminaire aux première et deuxième étapes, au cours de laquelle le calculateur mémorise une valeur représentative d'un régime moteur maximal admissible du véhicule, une valeur de seuil de régime inférieur associé à chaque rapport de démultiplication, un valeur de seuil de régime supérieur associé à chaque rapport de démultiplication, une valeur de réduction associée à chaque rapport de démultiplication, et une valeur déterminée d'écart de vitesse.
- le procédé comporte une quatrième étape de calcul, préliminaire aux première et deuxième étapes, qui suit la troisième étape et au cours de laquelle la calculateur calcule :

  • une valeur représentative d'un régime moteur maximal admissible pour chaque rapport pendant la première étape, qui est égale à la différence entre la valeur représentative du régime moteur maximal admissible du véhicule et la valeur de seuil de régime inférieur,
  • une valeur représentative d'un régime moteur maximal admissible pour chaque rapport pendant la deuxième étape, qui est égale à la différence entre la valeur représentative du régime moteur maximal admissible du véhicule et la valeur de seuil de régime supérieur,

- une valeur représentative d'une vitesse maximale admissible du véhicule pour le rapport au cours de la première étape, qui est égale au quotient de la valeur, représentative du régime moteur maximal admissible pour chaque rapport par la valeur de réduction associée au rapport,

- une valeur représentative d'une vitesse maximale admissible du véhicule pour le rapport au cours de la deuxième étape, qui est égale au quotient de la valeur, représentative du régime moteur maximal admissible pour chaque rapport par la valeur de réduction associée au rapport,

- la première étape de détermination du rapport objectif comporte :

- une première sous-étape de test au cours de laquelle le calculateur compare une valeur instantanée de kick associée à l'enfoncement de la pédale d'accélérateur à la valeur unitaire pour déclencher une deuxième sous-étape de test si la valeur instantanée de kick est égale à la valeur unitaire ou bien sinon commander le retour au mode de fonctionnement normal,

- la deuxième sous-étape de test au cours de laquelle le calculateur détermine la valeur de vitesse maximale admissible du véhicule pour ledit rapport qui est la plus immédiatement supérieure à une valeur représentative de la vitesse instantanée du véhicule,

- une troisième sous-étape d'exécution au cours de laquelle le calculateur commande le passage du rapport associé à la valeur la plus immédiatement supérieure à la valeur déterminée lors de la deuxième sous-étape de test,

- une quatrième sous-étape de test au cours de laquelle le calculateur compare la valeur représentative de la vitesse instantanée du véhicule à une valeur de vitesse de seuil admissible au cours de la première étape qui est égale à la différence entre la valeur déterminée au cours de la deuxième sous étape de test et la valeur déterminée d'écart de vitesse, pour déclencher la deuxième étape de montée des rapports si la valeur représentative de la vitesse instantanée du véhicule est supérieure à la valeur de la vitesse de seuil admissible, ou bien sinon pour revenir à la quatrième sous étape de test.

- la deuxième étape de montée des rapports comporte

- une cinquième sous-étape de test au cours de laquelle le calculateur détermine la valeur représentative de la vitesse maximale admissible du véhicule pour ledit rapport qui est la plus immédiatement inférieure à la valeur représentative de la vitesse instantanée du véhicule,

- une sixième sous-étape d'exécution au cours de laquelle le calculateur commande le passage du rapport associé à la valeur représentative de la vitesse maximale admissible du véhicule déterminée lors de la cinquième sous-étape,

- une septième sous-étape de test au cours de laquelle le calculateur compare la valeur représentative de la vitesse instantanée du véhicule à une valeur de vitesse de seuil admissible au cours de la deuxième étape qui est égale à la somme de la valeur déterminée au cours de la cinquième sous étape de test et de la valeur déterminée d'écart de vitesse, pour déclencher une huitième sous-étape de test si la valeur représentative de la vitesse instantanée du véhicule est supérieure à la valeur de la vitesse de seuil admissible, ou bien sinon pour revenir à la sixième sous-étape d'exécution, la huitième sous-étape de test étant une étape au cours de laquelle le calculateur compare la valeur instantanée de kick associée à l'enfoncement de la pédale d'accélérateur à la valeur unitaire pour déclencher le retour à la cinquième sous-étape de test si la valeur instantanée de kick est égale à la valeur unitaire, ou bien sinon pour commander le retour au mode de fonctionnement normal.

D'autres caractéristiques et avantages de l'invention apparaîtront à la lecture de la description détaillée qui suit pour la compréhension de laquelle on se reportera aux dessins annexés dans lesquels :

- la figure 1 est un organigramme illustrant le déroulement du procédé, et notamment le déroulement de ses première et deuxième étapes ;
- la figure 2 est un organigramme illustrant le déroulement des troisième et quatrième étapes du procédé.

Dans la description qui va suivre, des chiffres de référence identiques désignent des éléments identiques.

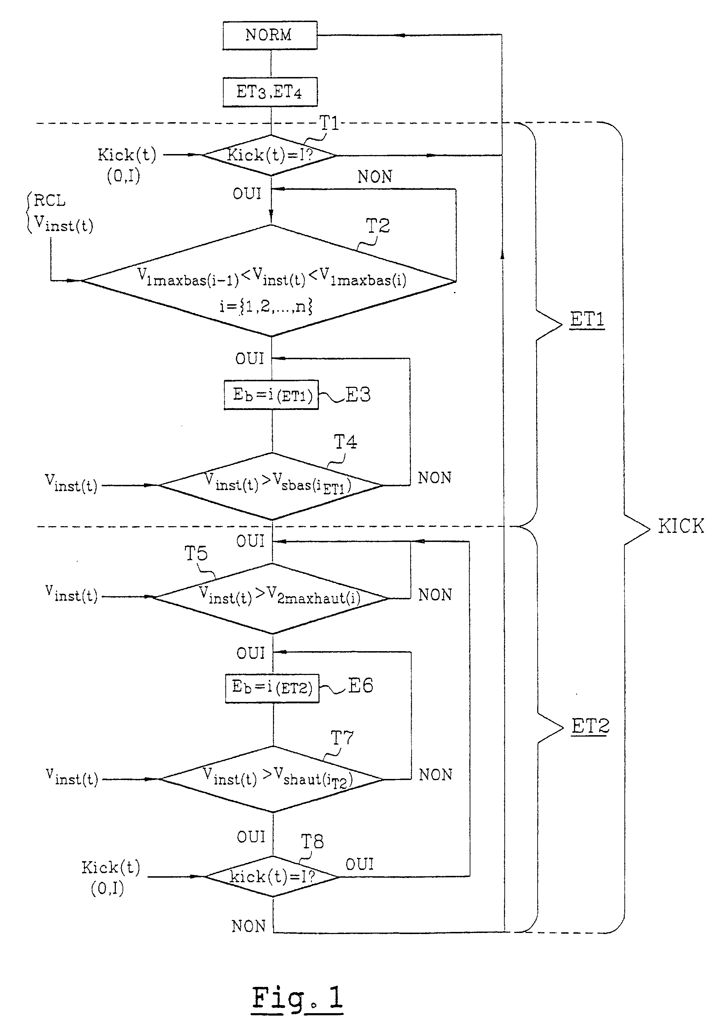

On a représenté sur l'organigramme de la figure 1 le déroulement d'un procédé de gestion d'un calculateur commandant le passage des rapports d'une boîte de vitesses de véhicule automobile.

De manière connue le procédé comporte au moins un mode de fonctionnement normal "NORM" dans lequel le passage de chaque rapport est régi par une loi associée qui est fonction de la position d'une pédale d'accélérateur du véhicule et de la vitesse instantanée du véhicule.

De manière connue, le passage des rapports en mode normal "NORM" est indexé sur une cartographie (non représentée) comportant des zones associées chacune à l'engagement d'un rapport déterminé. Le calculateur détermine le point de fonctionnement du véhicule, qui est défini notamment par la vitesse du véhicule et la position de la pédale d'accélérateur, qui est exprimée sous la forme d'un pourcentage compris entre 0 et 100%, le pourcentage nul correspondant à la position relâchée de la pédale d'accélérateur et le pourcentage de 100%, correspondant à la position d'enfoncement maximal de la pédale d'accélérateur effectué lentement. En fonction de la position de ce point de fonctionnement dans une zone déterminée, le calculateur commande le passage du rapport correspondant. Cette configuration étant connue de l'état de la technique, elle ne sera pas développée plus explicitement dans la présente description.

De manière connue, le procédé comporte au moins un mode de fonctionnement de kick "KICK", dans lequel, en réponse à une information "kick(t)" représentative d'un enfoncement maximal de la pédale d'accélérateur, le calculateur commande le passage de rapports d'ordre inférieur à celui qui serait déterminé par le calculateur en mode "NORM" de fonctionnement normal pour provoquer une accélération maximale du véhicule.

Conformément à l'invention, le mode de fonctionnement de kick "KICK" commande le passage des rapports indépendamment des lois qui leur sont associées en mode de fonctionnement normal "NORM" et il comporte au moins:

- une première étape "ET1" de détermination d'un rapport objectif provoquant l'accélération maximale du véhicule compte tenu de sa vitesse instantanée "Vinst(t)",
- une deuxième étape "ET2" de montée des rapports au cours de laquelle, à partir du rapport objectif précédemment déterminé, le calculateur commande la montée des rapports compte tenu de la vitesse instantanée "Vinst(t)" du véhicule de manière à provoquer l'accélération maximale du véhicule.

Comme on peut le voir de manière générale sur la figure 1, le déroulement des étapes "ET1" et "'ET2" nécessite l'entrée de l' information "kick(t)" représentative de la détection d'un enfoncement maximal de la pédale d'accélérateur et de l'information "Vinst(t)" représentative de la vitesse instantanée du véhicule. L'information "kick(t)" peut prendre les valeurs unitaires "1" ou nulle "0" selon qu'un enfoncement maximal de la pédale d'accélérateur est détecté ou non, et l'information "Vinst(t)" représentative de la vitesse instantanée du véhicule peut prendre toutes les valeurs situées dans la plage de valeurs de vitesses suivant lesquelles le véhicule est susceptible de rouler.

Par ailleurs, le déroulement des étapes le déroulement des étapes "ET1" et "'ET2" nécessite aussi l'entrée d'un ensemble "RCL" de valeurs qui sont calculées par le calculateur indépendamment du déroulement des première et deuxième étapes "ET1" et "ET2".

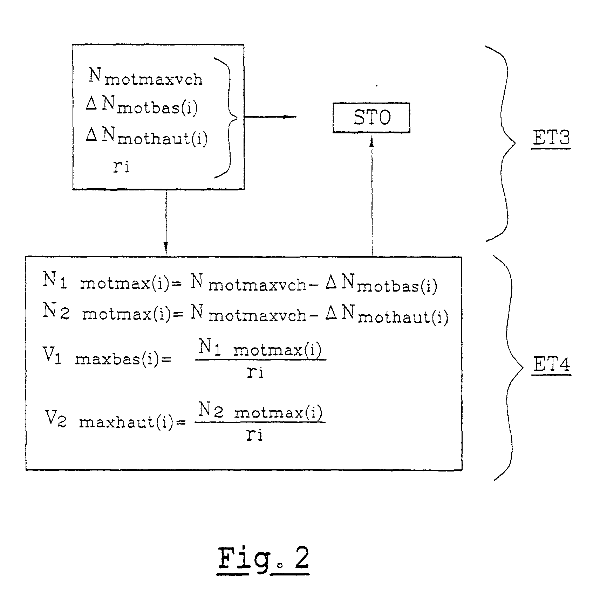

En effet, conformément à l'invention, et comme l'illustre la figure 2, le procédé comporte une troisième étape "ET3" indépendante de mémorisation, préliminaire aux première et deuxième étapes "ET1" et "ET2", au cours de laquelle le calculateur stocke dans une mémoire "STO" différentes valeurs, et une quatrième étape "ET4" de calcul au cours de laquelle le calculateur calcule d'autres valeurs en fonction des valeurs précédemment obtenues lors de la troisième étape "ET3" puis les stocke dans la mémoire "STO". L'ensemble "RCL" de ces valeurs peut alors être rappelé au cours des première et deuxième étapes "ET1" et "ET2" pour permette le déroulement du procédé.

Plus particulièrement, au cours de la troisième étape "Et3" de mémorisation qui est représentée à la figure 2, le calculateur stocke dans la mémoire "STO" une valeur "$N_{motmaxveh}$" représentative d'un régime moteur maximal admissible du véhicule. Cette valeur correspond à la valeur de régime maximal que peut théoriquement fournir le moteur du véhicule.

Au cours de la troisième étape "ET3" de mémorisation le calculateur stocke aussi dans la mémoire "STO" une valeur de seuil de régime inférieur "$\Delta N_{motbas(i)}$" associé à chaque rapport "i" de démultiplication. Cette valeur de seuil est destinée, comme on le verra ultérieurement, à minorer, en fonction de chaque rapport "i", la valeur "$N_{motmaxveh}$" représentative du régime moteur maximal admissible du véhicule, et elle sera plus particulièrement utilisée au cours de la deuxième étape "ET2" du procédé.

Au cours de la troisième étape "ET3" de mémorisation, le calculateur stocke aussi dans la mémoire "STO" une valeur de seuil de régime supérieur "$\Delta N_{mothaut(i)}$" associé à chaque rapport "i" de démultiplication. Cette valeur de seuil est destinée, comme on le verra ultérieurement, à minorer, en fonction de chaque rapport "i", la valeur "$N_{motmaxveh}$" représentative du régime moteur maximal admissible du véhicule, et elle sera plus particulièrement utilisée au cours de la troisième étape "ET3" du procédé.

Enfin, au cours de la troisième étape "ET3" de mémorisation, le calculateur stocke une valeur de réduction $r_i$" associée à chaque rapport "i" de démultiplication, et une valeur "$V_\Delta$" d'écart de vitesse déterminée, qui sera utilisée au cours des étapes "ET1" et "ET2".

A la suite de la troisième étape "ET3", le procédé comporte une quatrième étape "ET4" de calcul, qui est elle aussi préliminaire aux première et deuxième étapes "ET1" et "ET2", et au cours de laquelle le calculateur calcule une valeur "$N1_{motmax(i)}$", représentative d'un régime moteur maximal admissible pour chaque rapport "i" pendant la première étape "ET1".

Cette valeur "$N1_{motmax(i)}$" est égale à la différence entre la valeur "$N_{motmaxveh}$" qui est représentative

du régime moteur maximal admissible du véhicule et la valeur de seuil de régime inférieur "$\Delta N_{motbas(i)}$":

$$N1_{motmax(i)} = N_{motmaxveh} - \Delta N_{motbas(i)},$$

De cette valeur "$N1_{motmax(i)}$" et de la valeur de réduction "$r_i$" du rapport "i", le calculateur déduit une valeur "$V1_{maxbas(i)}$" qui est représentative d'une vitesse maximale admissible du véhicule pour le rapport (i) au cours de la première étape (ET1). Cette valeur "$V1_{maxbas(i)}$" est égale au quotient de la valeur "$N1_{motmax(i)}$", représentative du régime moteur maximal admissible pour chaque rapport "i" par la valeur de réduction "$r_i$" associée au rapport "i":

$$V1_{maxbas(i)} = N1_{motmax(i)} / r_i,$$

Au cours de la quatrième étape "ET4", le calculateur calcule aussi une valeur "$N2_{motmax(i)}$", qui est représentative d'un régime moteur maximal admissible pour chaque rapport "i" pendant la deuxième étape "ET2". Cette valeur "$N2_{motmax(i)}$" est égale à la différence entre la valeur "$N_{motmaxveh}$" représentative du régime moteur maximal admissible du véhicule et la valeur de seuil de régime supérieur "$\Delta N_{mothaut(i)}$" :

$$N2_{motmax(i)} = N_{motmaxveh} - \Delta N_{mothaut(i)},$$

De cette valeur "$N2_{motmax(i)}$" et de la valeur de réduction "$r_i$" du rapport "i", le calculateur déduit une valeur "$V2_{maxhaut(i)}$" qui est représentative d'une vitesse maximale admissible du véhicule pour le rapport "i" au cours de la deuxième étape "ET2", Cette valeur "$N2_{motmax(i)}$" est égale au quotient de la valeur "$N2_{motmax(i)}$", représentative du régime moteur maximal admissible pour chaque rapport "i" par la valeur de réduction "$r_i$" associée au rapport "i" :

$$V2_{maxhaut(i)} = N2_{motmax(i)} / r_i.$$

Il sera compris que les calculs effectués au cours des étapes "ET3" et "ET4", réalisés pour tous les rapports "i", peuvent intervenir à n'importe quel instant, du moment qu'ils sont préliminaires aux étapes "ET1" et "ET2". En particulier, ces calculs peuvent de préférence intervenir lors de la mise en service du véhicule, lors d'une unique phase d'initialisation du calculateur.

De la sorte, le calculateur de commande de changement des rapports peut être géré en cas de détection d'un "kick" par le procédé suivant les deux étapes "ET1" et "ET2" représentées à la figure 1.

Dans cette configuration, la première étape "ET1" de détermination du rapport objectif comporte d'abord une première sous-étape "T1" de test au cours de laquelle le calculateur compare une valeur "kick(t)" instantanée de kick associée à l'enfoncement de la pédale d'accélérateur à la valeur unitaire "1".

A l'occasion de cette étape, la valeur "kick(t)" est introduite dans le calculateur ainsi que l'ensemble "RCL" de valeurs précédemment établies aux étapes "ET3" et "ET4".

Le calculateur commande le retour au mode "NORM" de fonctionnement normal si la valeur "kick(t)" correspond à la valeur nulle "0", c'est à dire si l'enfoncement de la pédale n'est pas maximal ou bien si la valeur "kick(t)" instantanée de kick est égale à la valeur unitaire "1", déclenche une deuxième sous-étape "T2" de test.

Au cours de la deuxième sous-étape "T2" de test, le calculateur détermine, en choisissant dans les valeurs précédemment calculées à l'étape "ET4", la valeur "$V1_{maxbas(i)}$" de vitesse maximale admissible du véhicule qui est la plus immédiatement supérieure à la valeur "Vinst(t)" représentative de la vitesse instantanée du véhicule.

Le rapport objectif "$i_{ET1}$", associé à cette valeur "$V1_{maxbas(i)}$" particulière est alors mémorisé par le calculateur.

Puis, au cours d'une troisième sous-étape "E3" d'exécution, le calculateur commande le passage $E_b$ du rapport objectif "$i_{ET1}$" précédemment déterminé lors de la deuxième sous-étape "T2".

Comme on le voit, le passage du rapport "$i_{ET1}$" est complètement indépendant des lois de passage de la boîte en mode normal. La boîte peut ainsi effectuer un simple, double ou triple rétrogradage de manière que le véhicule bénéficie de la puissance maximum en reprise.

Puis, au cours d'une quatrième sous-étape de test "T4", la valeur "Vinst(t)" ayant été à nouveau introduite dans le calculateur, celui-ci compare la valeur "Vinst(t)" représentative de la vitesse instantanée du véhicule à une valeur de vitesse "$Vsbas(i_{ET1})$" de seuil admissible au cours de la première étape (ET1). Cette opération a pour but d'éviter d'engager trop tôt un nouveau rapport, surtout si la vitesse instantanée "Vinst(t)" du véhicule est, du fait de l'accélération du véhicule consécutive au changement de rapport précédent, très proche d'une vitesse "$V1_{maxbas(i)}$" maximale admissible du véhicule associée à un rapport différent.

A cet effet, la valeur de vitesse "$Vsbas(i_{ET1})$" de seuil admissible est égale à la différence entre la valeur "$V1_{maxbas(i)}$" déterminée au cours de la deuxième sous étape de test "T2" et la valeur déterminée "$V_\Delta$" d'écart de vitesse:

$$Vsbas(i_{ET1}) = V1_{maxbas(i)} - V_\Delta,$$

Si la valeur "Vinst(t)" représentative de la vitesse instantanée du véhicule est supérieure à la valeur de la vitesse "$Vsbas(i_{ET1})$" de seuil admissible, le calculateur déclenche la deuxième étape "ET2" de montée des rapports, ou bien sinon il revient à la quatrième sous étape de test "T4" précédemment décrite.

La deuxième étape "ET2" de montée des rapports comporte tout d'abord une cinquième sous-étape "T5" de test au cours de laquelle, la valeur "Vinst(t)" ayant été à nouveau introduite dans le calculateur, celui-ci détermine, en choisissant dans les valeurs précédemment calculées à l'étape "ET4", la valeur "V2$_{maxhaut(i)}$" représentative de la vitesse maximale admissible du véhicule qui est la plus immédiatement inférieure à la valeur "Vinst(t)" représentative de la vitesse instantanée du véhicule.

Le rapport objectif "i$_{ET2}$", associé à cette valeur "V2$_{maxhaut(i)}$" particulière est alors mémorisé par le calculateur.

Puis, au cours une sixième sous-étape "E6" d'exécution, le calculateur commande le passage E$_b$ du rapport objectif "i$_{ET2}$" précédemment déterminé lors de la cinquième sous-étape "T5".

Puis, au cours d'une septième sous-étape "T7" de test, le calculateur compare la valeur "Vinst(t)" représentative de la vitesse instantanée du véhicule à une valeur de vitesse "Vsbas(i$_{ET2}$)" de seuil admissible au cours de la deuxième étape (ET2). Cette opération a pour but d'éviter d'engager trop tôt un nouveau rapport, surtout si la vitesse instantanée "Vinst(t)" du véhicule est, du fait de l'accélération du véhicule consécutive au changement de rapport précédent, très proche d'une vitesse "V2$_{maxhaut(i)}$" maximale admissible du véhicule associée à un rapport différent.

A cet effet, la valeur de vitesse "Vsbas(i$_{ET2}$)" de seuil admissible est égale à la somme de la valeur "V2$_{maxhaut(i)}$" déterminée au cours de la cinquième sous étape de test "T5" et de la valeur V$_\Delta$ déterminée d'écart de vitesse:

$$Vshaut(i_{ET2}) = V2_{maxhaut(i)} + V_\Delta,$$

Si la valeur "Vinst(t)" représentative de la vitesse instantanée du véhicule est supérieure à la valeur de la vitesse "Vshaut(i$_{ET2}$)" de seuil admissible, le calculateur déclenche une huitième sous-étape de test "T8" ou bien sinon revient à la sixième sous-étape "E6" d'exécution.

La huitième sous-étape "T8" de test est une étape de vérification au cours de laquelle le calculateur vérifie que le "kick" est toujours demandé par le conducteur du véhicule. A cet effet, le calculateur compare à nouveau la valeur "kick(t)" instantanée de kick associée à l'enfoncement de la pédale d'accélérateur à la valeur unitaire "1". Il déclenche le retour à la cinquième sous-étape "T5" de test, c'est à dire la poursuite de la montée des rapports, si la valeur "kick(t)" instantanée de kick est égale à la valeur unitaire "1", ou bien sinon il commande le retour au mode "NORM" de fonctionnement normal.

L'invention permet donc de disposer d'un procédé de gestion d'un calculateur commandant le passage des rapports d'une boîte de vitesses de véhicule automobile qui s'affranchit complètement des lois de passage de ladite boîte.

## Revendications

**1.** Procédé de gestion d'un calculateur commandant le passage des rapports d'une boîte de vitesses de véhicule automobile, du type qui comporte au moins un mode (NORM) de fonctionnement normal (NORM) dans lequel le passage de chaque rapport est régi par une loi associée qui est fonction de la position d'une pédale d'accélérateur du véhicule et de la vitesse instantanée du véhicule, et du type qui comporte au moins un mode de fonctionnement dit "de kick", dans lequel, en réponse à une information (kick(t)) représentative d'un enfoncement maximal de la pédale d'accélérateur, le calculateur commande le passage de rapports d'ordre inférieur à celui qui serait déterminé par le calculateur en mode (NORM) de fonctionnement normal pour provoquer une accélération maximale du véhicule,

   **caractérisé en ce que** le mode de fonctionnement de kick commande le passage des rapports indépendamment des lois qui leur sont associées en mode de fonctionnement normal et **en ce qu'**il comporte au moins:

   - une première étape (ET1) de détermination d'un rapport objectif provoquant l'accélération maximale du véhicule compte tenu de sa vitesse instantanée,
   - une deuxième étape (ET2) de montée des rapports au cours de laquelle, à partir du rapport objectif précédemment déterminé, le calculateur commande la montée des rapports compte tenu de la vitesse instantanée du véhicule de manière à provoquer l'accélération maximale du véhicule.

**2.** Procédé selon la revendication précédente, **caractérisé en ce qu'**il comporte une troisième étape (ET3) indépendante de mémorisation (STO), préliminaire aux première et deuxième étapes, au cours de laquelle le calculateur mémorise :

   - une valeur (N$_{motmaxveh}$) représentative d'un régime moteur maximal admissible du véhicule,
   - une valeur de seuil de régime inférieur ($\Delta$N$_{motbas(i)}$) associé à chaque rapport (i) de démultiplication,
   - une valeur de seuil de régime supérieur ($\Delta$N$_{mothaut(i)}$) associé à chaque rapport (i) de démultiplication,
   - une valeur de réduction (r$_i$) associée à chaque

rapport (i) de démultiplication, et

- une valeur déterminée ($V_\Delta$) d'écart de vitesse.

3. Procédé selon la revendication précédente, **caractérisé en ce qu'**il comporte une quatrième étape (ET4) de calcul, préliminaire aux première et deuxième étapes, qui suit la troisième étape (ET3) et au cours de laquelle la calculateur calcule :

- une valeur ($N1_{motmax(i)}$), représentative d'un régime moteur maximal admissible pour chaque rapport (i) pendant la première étape (ET1), qui est égale à la différence entre la valeur ($N_{motmaxveh}$) représentative du régime moteur maximal admissible du véhicule et la valeur de seuil de régime inférieur ($\Delta N_{motbas(i)}$) :

$$N1_{motmax(i)} = N_{motmaxveh} - \Delta N_{motbas(i)},$$

- une valeur ($N2_{motmax(i)}$), représentative d'un régime moteur maximal admissible pour chaque rapport (i) pendant la deuxième étape (ET2), qui est égale à la différence entre la valeur ($N_{motmaxveh}$) représentative du régime moteur maximal admissible du véhicule et la valeur de seuil de régime supérieur ($\Delta N_{mothaut(i)}$) :

$$N2_{motmax(i)} = N_{motmaxveh} - \Delta N_{mothaut(i)},$$

- une valeur ($V1_{maxbas(i)}$), représentative d'une vitesse maximale admissible du véhicule pour le rapport (i) au cours de la première étape (ET1), qui est égale au quotient de la valeur ($N1_{motmax(i)}$), représentative du régime moteur maximal admissible pour chaque rapport (i) par la valeur de réduction ($r_i$) associée au rapport (i) :

$$V1_{maxbas(i)} = N1_{motmax(i)} / r_i,$$

et

- une valeur ($V2_{maxhaut(i)}$), représentative d'une vitesse maximale admissible du véhicule pour le rapport (i) au cours de la deuxième étape (ET2), qui est égale au quotient de la valeur ($N2_{motmax(i)}$), représentative du régime moteur maximal admissible pour chaque rapport (i) par la valeur de réduction ($r_i$) associée au rapport (i) :

$$V2_{maxhaut(i)} = N2_{motmax(i)} / r_i.$$

4. Procédé selon la revendication précédente, **carac-**

**térisé en ce que** la première étape (ET1) de détermination du rapport objectif comporte :

- une première sous-étape (T1) de test au cours de laquelle le calculateur compare une valeur (kick(t)) instantanée de kick associée à l'enfoncement de la pédale d'accélérateur à la valeur unitaire (1) pour déclencher une deuxième sous-étape (T2) de test si la valeur (kick(t)) instantanée de kick est égale à la valeur unitaire (1) ou bien sinon commander le retour au mode (NORM) de fonctionnement normal,
- la deuxième sous-étape (T2) de test au cours de laquelle le calculateur détermine la valeur ($V1_{maxbas(i)}$) de vitesse maximale admissible du véhicule pour le rapport ($i_{ET1}$) la plus immédiatement supérieure à une valeur (Vinst(t)) représentative de la vitesse instantanée du véhicule,
- une troisième sous-étape (E3) d'exécution au cours de laquelle le calculateur commande le passage du rapport ($i_{ET1}$) associé à la valeur ($V1_{maxbas(i)}$) la plus immédiatement supérieure à la valeur (Vinst(t)) déterminée lors de la deuxième sous-étape (T2) de test,
- une quatrième sous-étape de test (T4) au cours de laquelle le calculateur compare la valeur (Vinst(t)) représentative de la vitesse instantanée du véhicule à une valeur de vitesse (Vsbas ($i_{ET1}$)) de seuil admissible au cours de la première étape (ET1) qui est égale à la différence entre la valeur ($V1_{maxbas(i)}$) déterminée au cours de la deuxième sous étape de test et la valeur déterminée $V_\Delta$ d'écart de vitesse,

$$Vsbas(i_{ET1}) = V1_{maxbas(i)} - V_\Delta,$$

pour déclencher la deuxième étape (ET2) de montée des rapports si la valeur (Vinst(t)) représentative de la vitesse instantanée du véhicule est supérieure à la valeur de la vitesse (Vsbas($i_{ET1}$)) de seuil admissible, ou bien sinon pour revenir à la quatrième sous étape de test (T4).

5. Procédé selon la revendication précédente, **caractérisé en ce que** la deuxième étape (ET2) de montée des rapports comporte :

- une cinquième sous-étape (T5) de test au cours de laquelle le calculateur détermine la valeur ($V2_{maxhaut(i)}$), représentative de la vitesse maximale admissible du véhicule pour le rapport ($i_{ET2}$) la plus immédiatement inférieure à la valeur (Vinst(t)) représentative de la vitesse instantanée du véhicule,
- une sixième sous-étape (E6) d'exécution au cours de laquelle le calculateur commande le passage du rapport ($i_{ET2}$) associé à la valeur ($V2_{maxhaut(i)}$), représentative de la vitesse maximale admissible du véhicule déterminée lors de la cinquième sous-étape (T5),

- une septième sous-étape (T7) de test au cours de laquelle le calculateur compare la valeur (Vinst(t)) représentative de la vitesse instantanée du véhicule à une valeur de vitesse (Vshaut($i_{ET2}$)) de seuil admissible au cours de la deuxième étape (ET2) qui est égale à la somme de la valeur ($V2_{maxhaut(i)}$) déterminée au cours de la cinquième sous étape de test (T5) et de la valeur déterminée $V_\Delta$ d'écart de vitesse :

$$Vshaut(i_{ET2}) = V2_{maxhaut(i)} + V_\Delta,$$

pour déclencher une huitième sous-étape de test (T8) si la valeur (Vinst(t)) représentative de la vitesse instantanée du véhicule est supérieure à la valeur de la vitesse (Vsup($i_{ET2}$)) de seuil admissible, ou bien sinon pour revenir à la sixième sous-étape (E6) d'exécution, la huitième sous-étape (T8) de test étant une étape au cours de laquelle le calculateur compare la valeur (kick(t)) instantanée de kick associée à l'enfoncement de la pédale d'accélérateur à la valeur unitaire (1) pour déclencher le retour à la cinquième sous-étape (T5) de test si la valeur (kick(t)) instantanée de kick est égale à la valeur unitaire (1), ou bien sinon pour commander le retour au mode (NORM) de fonctionnement normal.

**Patentansprüche**

1. Verfahren zur Verwaltung eines Rechners, der den Übergang der Gänge eines Getriebes eines Kraftfahrzeugs steuert, von dem Typ, der mindestens einen Normalbetriebsmodus (NORM) aufweist, in dem der Übergang eines jeden Gangs durch eine zugeordnete Regel geregelt wird, die von der Stellung eines Gaspedals des Fahrzeugs und der momentanen Geschwindigkeit des Fahrzeugs abhängt, und von dem Typ, der mindestens einen Betriebsmodus namens "Kick" aufweist, in dem als Antwort auf eine Information (kick(t)), die für ein maximales Durchdrücken des Gaspedals steht, der Rechner den Übergang der Gänge mit einem Rang anweist, der niedrigerer ist, als derjenige, der vom Rechner im Normalbetriebsmodus (NORM) bestimmt würde, um eine maximale Beschleunigung des Fahrzeugs hervorzurufen, **dadurch gekennzeichnet, dass** der Betriebsmodus Kick den Übergang der Gänge unabhängig von den Regeln steuert, die ihnen im Normalbetriebsmodus zugeordnet sind, und **dadurch**, dass er mindestens aufweist:

- einen ersten Schritt (ET1) der Bestimmung eines objektiven Gangs, der die maximale Beschleunigung des Fahrzeugs unter Berücksichtigung seiner momentanen Geschwindigkeit hervorruft,
- einen zweiten Schritt (ET2) des Anstiegs der Gänge, im Laufe dessen der Rechner, ausgehend vom objektiven Gang, der zuvor bestimmt wurde, den Anstieg der Gänge unter Berücksichtigung der momentanen Geschwindigkeit des Fahrzeugs steuert, um die maximale Beschleunigung des Fahrzeugs hervorzurufen.

2. Verfahren gemäß dem vorhergehenden Anspruch, **dadurch gekennzeichnet, dass** es einen unabhängigen dritten Schritt (ET3) des Speicherns (STO) aufweist, der den ersten und zweiten Schritt vorbereitet, im Laufe dessen der Rechner speichert:

- einen Wert ($N_{motmaxveh}$), der für eine maximal zulässige Motordrehzahl des Fahrzeugs steht,
- einen unteren Schwellenwert der Drehzahl ($\Delta N_{motbas(i)}$), der jedem Untersetzungsverhältnis (i) zugeordnet ist,
- einen oberen Schwellenwert der Drehzahl ($\Delta N_{mothaut(i)}$), der jedem Untersetzungsverhältnis (i) zugeordnet ist,
- einen Wert der Verringerung ($r_i$), der jedem Untersetzungsverhältnis (i) zugeordnet ist, und
- einen bestimmten Wert ($V_\Delta$) der Abweichung der Geschwindigkeit.

3. Verfahren gemäß dem vorhergehenden Anspruch, **dadurch gekennzeichnet, dass** es einen vierten Schritt (ET4) des Berechnens aufweist, der den ersten und zweiten Schritt vorbereitet und der dem dritten Schritt (ET3) folgt und im Laufe dessen der Rechner berechnet:

- einen Wert ($N1_{motmax(i)}$), der für eine maximal zulässige Motordrehzahl für jeden Gang (i) während des ersten Schritts (ET1) steht und der gleich der Differenz zwischen dem Wert ($N_{motmaxveh}$), der für die maximal zulässige Motordrehzahl des Fahrzeugs steht, und dem unteren Drehzahlschwellenwert ($\Delta N_{motbas(i)}$) ist:

$$N1_{motmax(i)} = N_{motmaxveh} - \Delta N_{motbas(i)},$$

- einen Wert ($N2_{motmax(i)}$), der für eine maximal zulässige Motordrehzahl für jeden Gang (i) während des zweiten Schritts (ET2) steht, und der gleich der Differnz zwischen dem Wert

($N_{motmaxveh}$), der für die maximal zulässige Motordrehzahl des Fahrzeugs steht, und dem oberen Drehzahlschwellenwert ($\Delta N_{mothaut(i)}$) ist:

$$N2_{motmax(i)} = N_{motmaxveh} - \Delta N_{mothaut(i)},$$

- einen Wert ($V1_{maxbas(i)}$), der für eine maximal zulässige Geschwindigkeit des Fahrzeugs für den Gang (i) im Lauf des ersten Schritts (ET1) steht, und der gleich dem Quotienten aus dem Wert ($N1_{motmax(i)}$), der für die maximal zulässige Motordrehzahl für jeden Gang (i) steht, und dem Wert der Verringerung ($r_i$) ist, der dem Gang (i) zugeordnet ist:

$$V1_{maxbas(i)} = N1_{motmax(i)} / r_i,$$

und
- einen Wert ($V2_{maxhaut(i)}$), der für eine maximal zulässige Geschwindigkeit des Fahrzeugs für den Gang (i) im Lauf des zweiten Schritts (ET2) steht, und der gleich dem Quotienten aus dem Wert ($N2_{motmax(i)}$), der für die maximal zulässige Motordrehzahl für jeden Gang (i) steht, und dem Wert der Verringerung ($r_i$) ist, der dem Gang (i) zugeordnet ist:

$$V2_{maxhaut(i)} = N2_{motmax(i)} / r_i.$$

4. Verfahren gemäß dem vorhergehenden Anspruch, **dadurch gekennzeichnet, dass** der erste Schritt (ET1) der Bestimmung des objektiven Gangs umfasst:

- einen ersten Unterschritt (T1) des Testens, im Laufe dessen der Rechner einen momentanen Wert (Kick (t)) des Kicks, der dem Drücken des Gaspedals zugeordnet ist, mit einem unitären Wert (1) vergleicht, um einen zweiten Unterschritt (T2) des Testens auszulösen, wenn der momentane Wert (kick(t)) des Kicks gleich dem unitären Wert (1) ist, bzw. andernfalls die Rückkehr in den Normalbetriebsmodus (NORM) anweist,
- den zweiten Unterschritt (T2) des Testens, im Laufe dessen der Rechner den Wert ($V1_{maxbas(i)}$) der maximal zulässigen Geschwindigkeit für jeden Gang ($i_{ET1}$) bestimmt, der derjenige ist, der am unmittelbarsten höher ist als ein Wert (Vinst(t)), der für die momentane Geschwindigkeit des Fahrzeugs steht,
- einen dritten Unterschritt (E3) des Ausführens, im Laufe dessen der Rechner den Übergang des Gangs ($i_{ET1}$) anweist, der dem Wert ($V1_{maxbas(i)}$) zugeordnet ist, der derjenige ist, der am unmittelbarsten höher ist als der Wert (Vinst(t)), der im zweiten Unterschritt (T2) des Testens bestimmt wurde,
- einen vierten Unterschritt des Testens (T4), im Laufe dessen der Rechner den Wert (Vinst(t)), der für die momentane Geschwindigkeit des Fahrzeugs steht, mit einem im Lauf des ersten Schritts (ET1) zulässigen Geschwindigkeitsschwellenwert ($Vsbas(i_{ET1})$) vergleicht, der gleich der Differenz zwischen dem Wert ($V1_{maxbas(i)}$), der im Lauf des zweiten Unterschritts des Tests bestimmt wird, und dem ermittelten Wert $V_\Delta$ der Abweichung der Geschwindigkeit ist,

$$Vsbas(i_{ET1}) = V1_{maxbas(i)} - V_\Delta,$$

um den zweiten Schritt (ET2) des Anstiegs der Gänge auszulösen, wenn der Wert (Vinst(t)), der für die momentane Geschwindigkeit des Fahrzeugs steht, höher ist als der zulässige Geschwindigkeitsschwellenwert ($Vsbas(i_{ET1})$), bzw. um andernfalls zum dritten Unterschritt des Testens (T4) zurückzukehren.

5. Verfahren gemäß dem vorhergehenden Anspruch, **dadurch gekennzeichnet, dass** der zweite Schritt (ET2) des Anstiegs der Gänge umfasst:

- einen fünften Unterschritt (T5) des Testens, im Laufe dessen der Rechner den Wert ($V2_{maxhaut(i)}$) bestimmt, der für die maximal zulässige Geschwindigkeit des Fahrzeugs für den Gang ($i_{ET2}$) steht, der derjenige ist, der am unmittelbarsten niedriger ist als der Wert (Vinst(t)), der für die momentane Geschwindigkeit des Fahrzeugs steht,
- einen sechsten Unterschritt (E6) des Ausführens, im Laufe dessen der Rechner den Übergang des Gangs ($i_{ET2}$) anweist, der dem Wert ($V2_{maxhaut(i)}$) zugeordnet ist und der für die maximal zulässige Geschwindigkeit des Fahrzeugs steht, der im fünften Unterschritt (T5) bestimmt wurde,
- einen siebten Unterschritt (T7) des Testens, im Laufe dessen der Rechner den Wert (Vinst(t)), der für die momentane Geschwindigkeit des Fahrzeugs steht, mit einem im Lauf des zweiten Schritts (ET2) zulässigen Geschwindigkeitsschwellenwert ($Vshaut(i_{ET2})$) vergleicht, der gleich der Summe des Wertes ($V2_{maxhaut(i)}$), der im Lauf des fünften Unterschritts des Testens (T5) bestimmt wurde, und dem bestimmten Wert $V_\Delta$ des Abweichens der Geschwindigkeit ist:

$$Vshaut(i_{ET2}) = V2_{maxhaut(i)} + V_\Delta,$$

um einen achten Unterschritt des Testens (T8) auszulösen, wenn der Wert (Vinst(t)), der für die momentane Geschwindigkeit des Fahrzeugs steht, höher ist als der zulässige Geschwindigkeitsschwellenwert (Vsup(i$_{ET2}$)), bzw. andernfalls zum sechsten Unterschritt (E6) des Ausführens zurückzukehren, wobei der achte Unterschritt (T8) des Testens ein Schritt ist, im Laufe dessen der Rechner den momentanen Wert (kick(t)) des Kicks, der dem Drücken des Gaspedals zugeordnet ist, mit dem unitären Wert (1) vergleicht, um die Rückkehr zum fünften Unterschritt (T5) des Testens auszulösen, wenn der momentane Wert (kick(t)) des Kicks gleich dem unitären Wert (1) ist, bzw. um andernfalls die Rückkehr zum Normalbetriebsmodus (NORM) anzuweisen.

## Claims

1. Process for managing a computer controlling the changes in gear ratio of a gearbox of a motor vehicle, of the type which comprises at least one normal operation mode (NORM) in which the change of each gear ratio is governed by an associated law which is a function of the position of an accelerator pedal of the vehicle and of the instantaneous speed of the vehicle and of the type which comprises at least one operation mode called "kick mode", in which, in response to information (kick(t)) representing a maximum pressing down of the accelerator pedal, the computer controls a change in gear ratio down from that which would be determined by the computer in normal operation mode (NORM) in order to produce a maximum acceleration of the vehicle,

   **characterized in that** the kick operation mode controls the changes in gear ratio independently of the laws which are associated with them in normal operation mode and **in that** it comprises at least:

   - a first stage (ET1) for determining an objective gear ratio which produces the maximum acceleration of the vehicle taking account of its instantaneous speed,
   - a second stage (ET2) of changing the gear ratios upwards during which, starting from the objective gear ratio determined previously, the computer controls the changing of the gear ratios upwards taking into account the instantaneous speed of the vehicle so as to produce the maximum acceleration of the vehicle.

2. Method according to the preceding claim, **characterized in that** it comprises a third independent stage (ET3) of storing in memory (STO), which is preliminary to the first and second stages, during which the computer stores in memory:

   - a value (N$_{motmaxveh}$) representing a maximum engine speed admissible for the vehicle,
   - a threshold value of a lower speed ($\Delta N_{motbas(i)}$) associated with each gear reduction ratio (i).
   - a threshold value of a higher speed ($\Delta N_{mothaut(i)}$) associated with each gear reduction ratio (i),
   - a reduction value (r$_i$) associated with each gear reduction (i), and
   - a determined speed difference value (V$_\Delta$).

3. Method according to the preceding claim, **characterized in that** it comprises a fourth stage (ET4) of calculation, preliminary to the first and second stages, which follows the third stage (ET3) and during which the computer calculates:

   - a value (N1$_{motmax(i)}$), representing a maximum admissible engine speed for each gear ratio (i) during the first stage (ET1), which is equal to the difference between the value (N$_{motmaxveh}$) representing the maximum admissible engine speed of the vehicle and the threshold value of the lesser speed ($\Delta N_{motbas(i)}$):

   $$N1_{motmax(i)} = N_{motmaxveh} - N_{motbas(i)},$$

   - a value (N2$_{motmax(i)}$) representing a maximum admissible engine speed for each gear ratio (i) during the second stage (ET2), which is equal to the difference between the value (N$_{motmaxveh}$) representing the maximum admissible engine speed of the vehicle and the threshold value of a higher speed ($\Delta N_{mothaut(i)}$),

   $$N2_{motmax(i)} = N_{motmaxveh} - \Delta N_{mothaut(i)},$$

   - a value (V1$_{maxbas(i)}$) representing a maximum admissible speed of the vehicle for the gear ratio (i) during the first stage (ET1), which is equal to the quotient of the value (N1$_{motmax(i)}$), representing the maximum admissible engine speed for each gear ratio (i) divided by the reduction value (r$_i$) associated with the gear ratio (i):

   $$V1_{maxbas(i)} = N1_{motmax(i)} / r_i,$$

   and
   - a value (V2$_{maxhaut(i)}$), representing a maximum admissible speed of the vehicle for the gear ratio (i) during the second stage (ET2), which is equal to the quotient of the value ($N2_{motmax(i)}$), representing the maximum admissible engine speed for each gear ratio (i) divided by the reduction value ($r_i$) associated with the gear ratio (i):

$$V2_{maxhaut(i)} = N2_{motmax(i)} / r_i.$$

4. Method according to the preceding claim, **characterized in that** the first stage (ET1) of determining the objective gear ratio comprises:

- a first sub-stage (T1) of testing during which the computer compares an instantaneous kick value (kick(t)) associated with the pressing down of the accelerator pedal with unity (1) in order to trigger a second sub-stage (T2) of testing if the instantaneous kick value (kiek(t)) is equal to unity (1) or if not to control the return to the normal operation mode (NORM),

- the second sub-stage (T2) of testing during which the computer determines the value ($V1_{maxbas(i)}$) of maximum admissible speed of the vehicle for the gear ratio ($i_{ET1}$) which is most immediately above a value (Vinst(t)) representing the instantaneous speed of the vehicle,

- a third sub-stage (E3) of execution during which the computer controls the change in the gear ratio ($i_{ET1}$) associated with the value ($V1_{maxbas(i)}$) which is the most immediately above the value (Vinst(t)) determined during the second sub-stage (T2) of testing,

- a fourth sub-stage of testing (T4) during which the computer compares the value (Vinst(t)) representing the instantaneous speed of the vehicle with an admissible threshold speed value ($Vsbas(i_{ET1})$) during the first stage (ET1) which is equal to the difference between the value ($V1_{maxbas(i)}$) determined during the second sub-stage of testing and the determined speed difference value $V_\Delta$.

$$Vsbas(i_{ET1}) = V1_{maxbas(i)} - V_\Delta,$$

in order to trigger the second stage (ET2) of changing the gear ratios upwards if the value (Vinst(t)) representing the instantaneous speed of the vehicle is above the value of the admissible threshold speed ($Vsbas(i_{ET1})$), or in order to return to the fourth sub-stage of testing (T4).

5. Method according to the preceding claim, **characterized in that** the second stage (ET2) of changing the gear ratios upwards comprises:

- a fifth sub-stage (T5) of testing during which the computer determines the value ($V2_{maxhaut(i)}$), representing the maximum admissible speed of the vehicle for the gear ratio ($i_{ET2}$) which is the most immediately below the value (Vinst(t)) representing the instantaneous speed of the vehicle,

- a sixth sub-stage (E6) of execution during which the computer controls the change in the gear ratio ($i_{ET2}$) associated with the value ($V2_{maxhaut(i)}$), representing the maximum admissible speed of the vehicle determined during the fifth sub-stage (T5),

- a seventh sub-stage (T7) of testing during which the computer compares the value (Vinst (t)) representing the instantaneous speed of the vehicle with an admissible threshold speed value ($Vshaut(i_{ET2})$) during the second stage (ET2) which is equal to the sum of the value ($V2_{maxhaut(i)}$) determined during the fifth sub-stage of testing (T5) and the determined speed difference value $V_\Delta$:

$$Vshaut(i_{ET2}) = V2_{maxhaut(i)} + V_\Delta,$$

in order to trigger an eighth sub-stage of testing (T8) if the value (Vinst(t)) representing the instantaneous speed of the vehicle is higher than the admissible threshold speed value ($Vsup(i_{ET2})$) or in order to return to the sixth sub-stage (E6) of execution, the eighth sub-stage (T8) of testing being a stage during which the computer compares the instantaneous kick value (kick(t)) associated with the pressing down of the accelerator pedal with unity (1) in order to trigger the return to the fifth sub-stage (T5) of testing if the instantaneous kick value (kick(t)) is equal to unity (1), or to control the return to normal operation mode (NORM).

NORM

ET3,ET4

— — — — — — — — — — — — T1 — — — — — — — — — — — — —

Kick(t) → Kick(t)=I?
(0,I)

NON

OUI

$\begin{cases} RCL \\ V_{inst(t)} \end{cases}$

T2

$V_{1maxbas(i-1)} < V_{inst(t)} < V_{1maxbas(i)}$
$i = \{1,2,...,n\}$

ET1

OUI

$E_b = i_{(ET1)}$ — E3

T4

$V_{inst(t)} → V_{inst(t)} > V_{sbas(i_{ET1})}$ NON

KICK

— — — — — — — — — — — — — — — — — — — — — — — — — —

OUI

T5

$V_{inst(t)} → V_{inst(t)} > V_{2maxhaut(i)}$ NON

OUI

$E_b = i_{(ET2)}$ — E6

T7

$V_{inst(t)} → V_{inst(t)} > V_{shaut(i_{T2})}$ NON

ET2

OUI T8

Kick(t) → kick(t)=I? OUI
(0,I)

NON

# Fig. 1

$$N_{motmaxvch}$$
$$\Delta N_{motbas(i)}$$
$$\Delta N_{mothaut(i)}$$
$$ri$$

STO

ET3

$$N_{1\ motmax(i)} = N_{motmaxvch} - \Delta N_{motbas(i)}$$

$$N_{2\ motmax(i)} = N_{motmaxvch} - \Delta N_{mothaut(i)}$$

$$V_{1\ maxbas(i)} = \frac{N_{1\ motmax(i)}}{ri}$$

$$V_{2\ maxhaut(i)} = \frac{N_{2\ motmax(i)}}{ri}$$

ET4

## Fig. 2